# EUROPEAN PATENT SPECIFICATION

(11) **EP 0 711 646 B1**
(45) Date of publication and mention of the grant of the patent: **18.08.1999**
(21) Application number: 95117513.2
(22) Date of filing: 07.11.1995
(51) Int. Cl.: B29C 45/44

(54) **A method of moulding plastic bumpers for motor vehicles and a die for implementing the method**
Verfahren zum Formen von Stossfängern aus Kunststoff für Kraftfahrzeuge und eine Form zur Durchführung des Verfahrens
Procédé pour mouler des pare-chocs en matière plastique pour véhicules automobiles et un moule pour la mise en oeuvre du procédé

(30) Priority: 10.11.1994 IT TO940897
(43) Date of publication of application: 15.05.1996
(73) Proprietor: FIAT AUTO S.p.A., 10135 Torino (IT)
(72) Inventor: Cavagnero, Guido, I-10122 Carmagnola ( Torino ) (IT)
(74) Representative: Serra, Francesco

(56) References cited:
- GB-A- 1 589 051
- US-A- 4 136 150
- US-A- 4 854 849
- PATENT ABSTRACTS OF JAPAN vol. 9 no. 322 (M-440) [2045] ,18 December 1985 & JP-A-60 157820 (TOYOTA JIDOSHA)

## Description

The present invention relates to a method of moulding plastics bumpers for motor vehicles and to a die for implementing the method. US-A- 4 854 849 is directed to such technology.

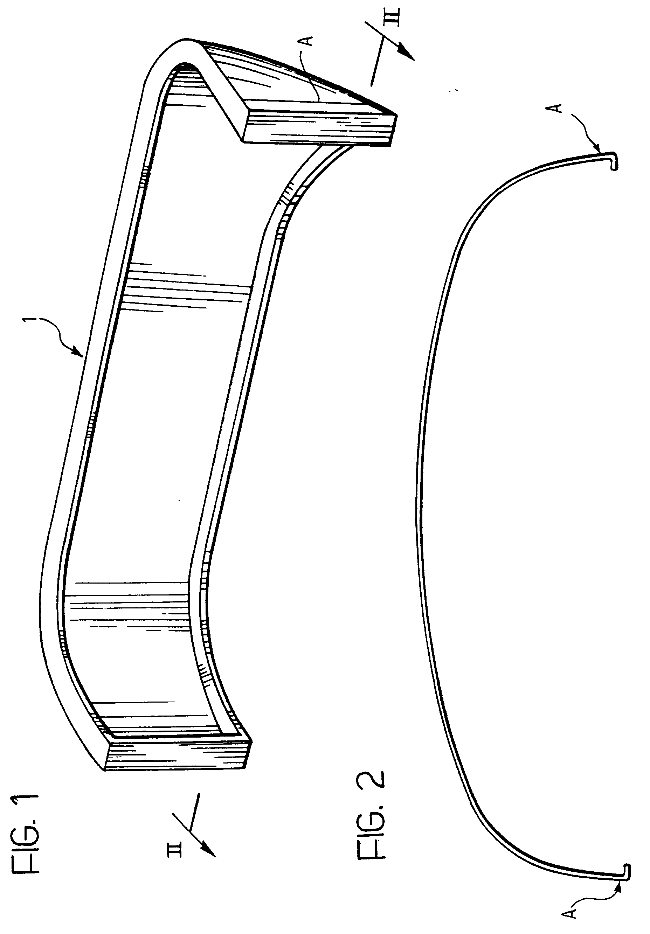

Figure 1 is an axonometric view of a typical plastics bumper for motor vehicles, indicated 1; Figure 2 is a section of the bumper of Figure 1 taken in the plane II-II indicated in that drawing.

Plastics bumpers of the type illustrated in Figures 1 and 2 are produced, according to the prior art, by means of dies of the type shown in partial schematic section in Figure 3.

In this drawing, a female matrix is indicated 3 and a male die is generally indicated 4; the male die 4 comprises a male matrix 5 and a pair of curved blocks 6, 6'; between the female matrix 3 and the male die 4, is a cavity 7 with a shape corresponding to that of the bumper 1 to be produced, shown in Figures 1 and 2.

Stripping plates, indicated 9, can be translated parallel to their starting positions guided by plate-guide pins perpendicular thereto and not shown, for simplicity.

Inclined pins 11, 11' which converge towards the female matrix 3 and are fixed to the stripping plates 9, 9' carry, at their free ends, the curved blocks 6,6' which are fixed firmly to the inclined pins 11, 11'.

The curved blocks 6,6' are in contact with the curved end surface of the bumper 1, the undercut portions 14, 14' of which bear partially against the flat portions of the blocks 6, 6'.

Adjacent the undercut portions 14, 14' of the bumper, there are stripping members 15, 15', the function of which will be explained below.

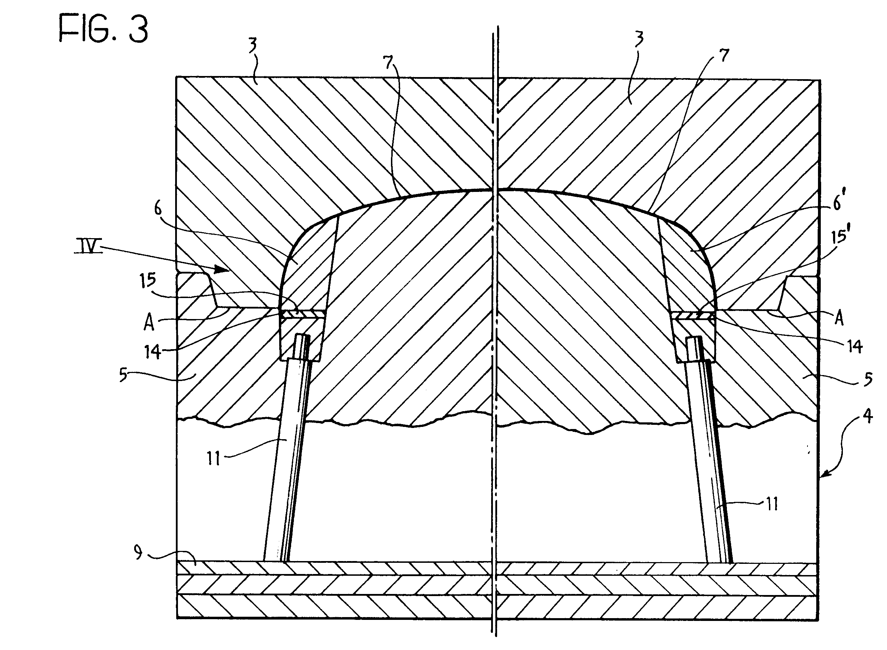

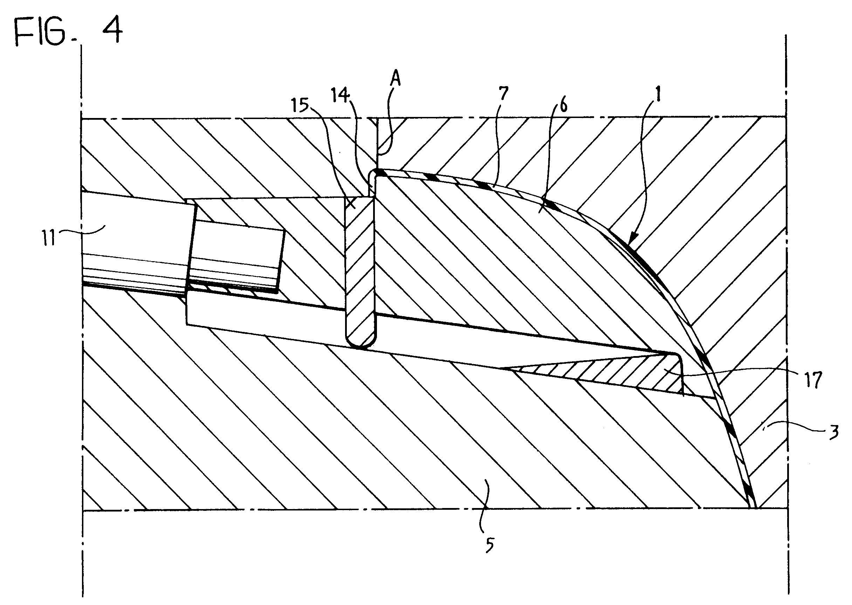

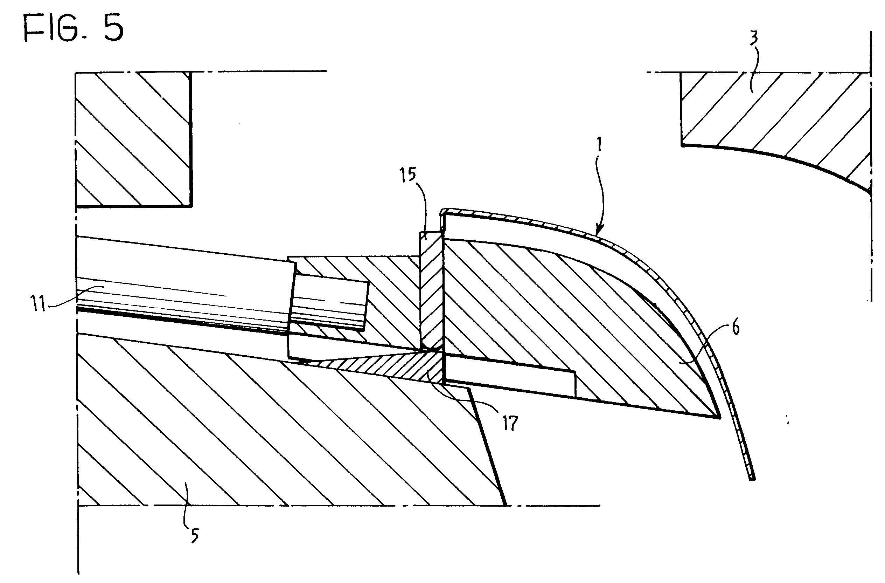

Reference will now be made to Figures 4 and 5 which show the portion indicated IV in Figure 3, in section and more completely, on an enlarged scale, in two different operative positions, the following applying in exactly the same way to the portion which is symmetrical to that indicated IV in Figure 3; in Figures 4 and 5, the parts corresponding to or the same as those shown in Figure 3 are indicated by the same reference numerals.

It is assumed that the bumper 1 (see Figures 1 and 2) has been formed and is to be removed from the die. In order to remove the bumper 1 from the cavity 7, the female matrix 3 is raised (by known means, not shown for simplicity) and the plates 9 are moved upwardly (see Figure 3) parallel to their starting positions, guided by the plate-guides mentioned above; the inclined pin 11 correspondingly moves along its own inclined axis and gradually brings the stripping member 15 into contact with an inclined plane 17 which gradually urges the stripping member 15 in a direction such as to move the bumper away from the curved block 6 until it is slid off the flat portion of the curved block 6 (Figure 5) so that the bumper is released from the die and can thus be removed therefrom.

Bumpers manufactured as described above have the disadvantage of having a flash-line in the region of the join between the female matrix and the male matrix (indicated A in Figures 1 to 4), which is visible once the bumper 1 is mounted on the car for which it is intended.

This flash-line has an unacceptable appearance, particularly for bumpers which are to be painted, such that, before being painted, bumpers produced by the method just described have to be sanded in the region mentioned above in order to eliminate the flash-line.

This involves considerable costs in terms of labour and times for handling the bumpers, with non-homogeneous results amongst the various bumpers after sanding.

The object of the present invention is to produce a bumper which avoids the aforementioned problems by having the join line between the male and female matrices in a region of the bumper which is not visible once it is mounted on the car for which it is intended.

The present invention achieves this and other advantages by means of a method of moulding bumpers for motor vehicles having the specific characteristics recited in claim 1.

The invention also comprises a die for implementing the method mentioned above as defined in claim 2.

The invention will now be described purely by way of non-limiting example, with reference to the appended drawings, in which:
Figures 1 to 5 (which have already been described) show a plastics bumper produced according to the prior art and the various stages of the moulding of the bumper and its removal from the die,

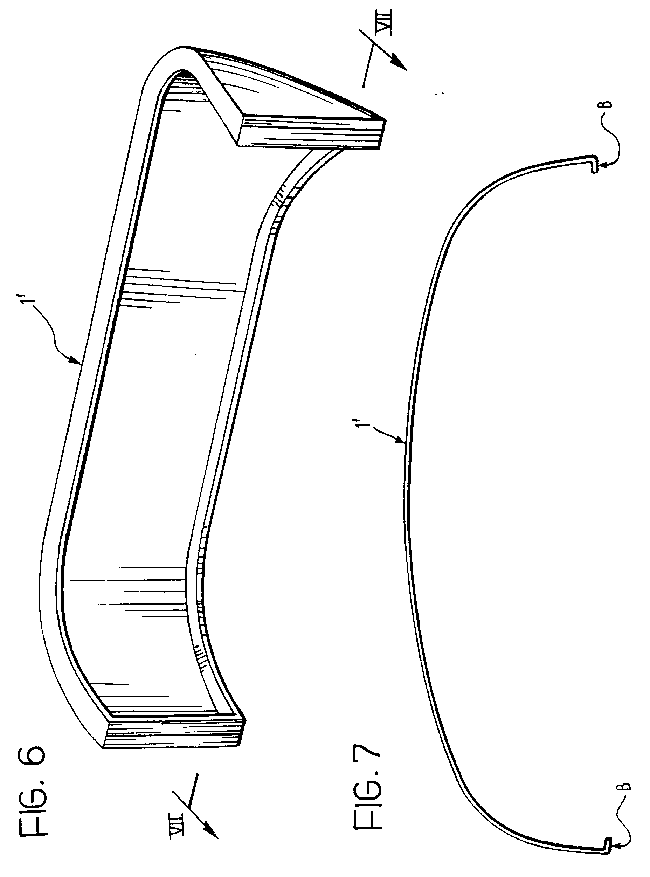

Figure 6 is a perspective view of a plastics bumper produced according to the invention,
Figure 7 shows the bumper of Figure 6 sectioned in the plane VII-VII of that drawing,

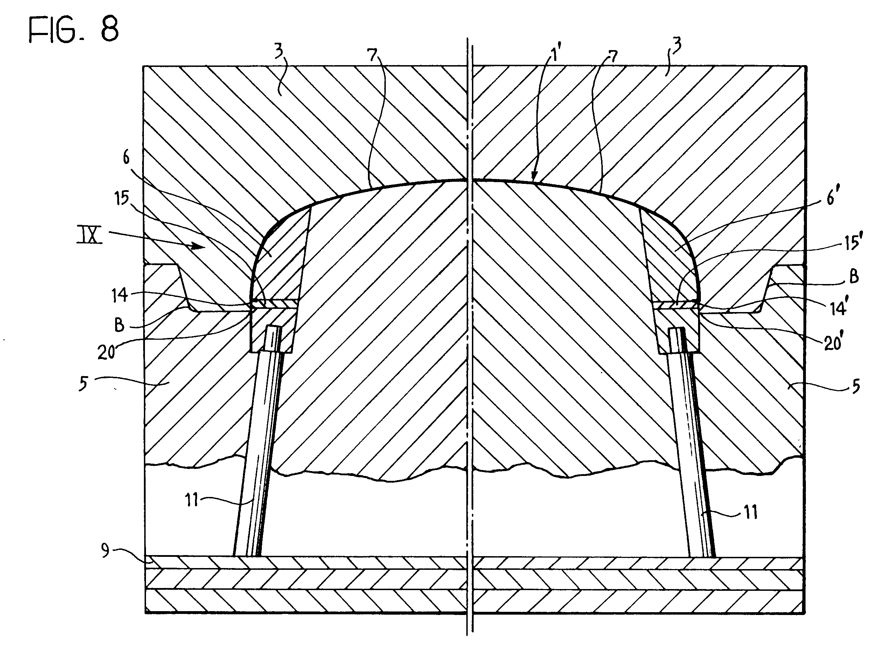

Figure 8 shows a die for producing a bumper according to the invention, in partial schematic section,

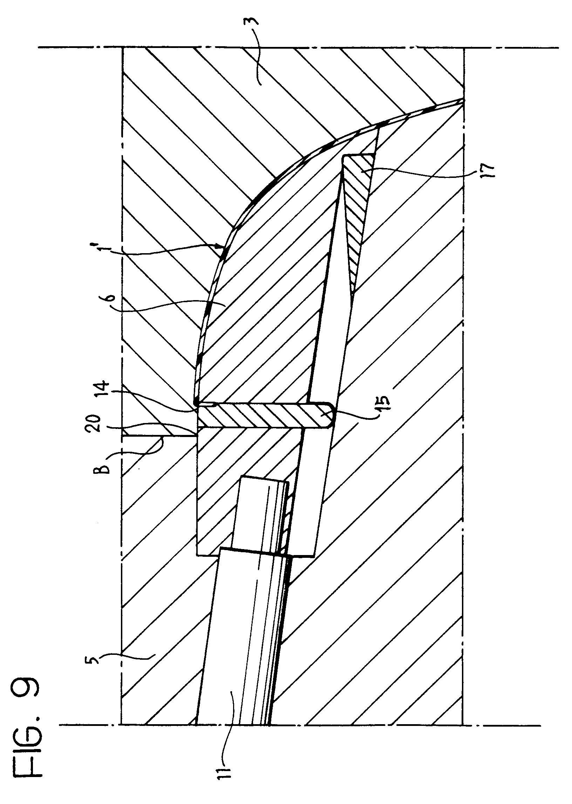

Figure 9 shows the portion indicated IX in Figure 8 more completely and on an enlarged scale, and

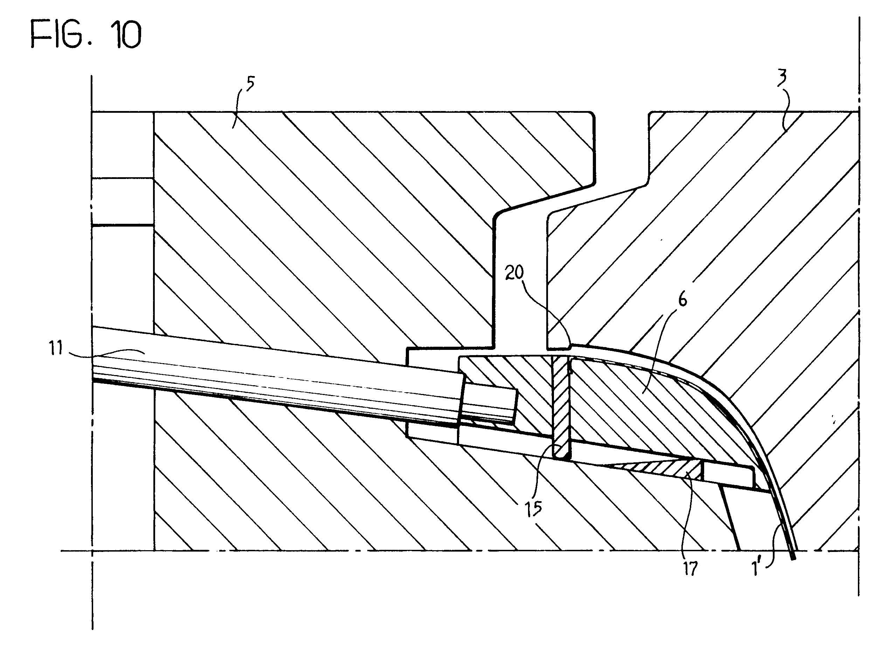

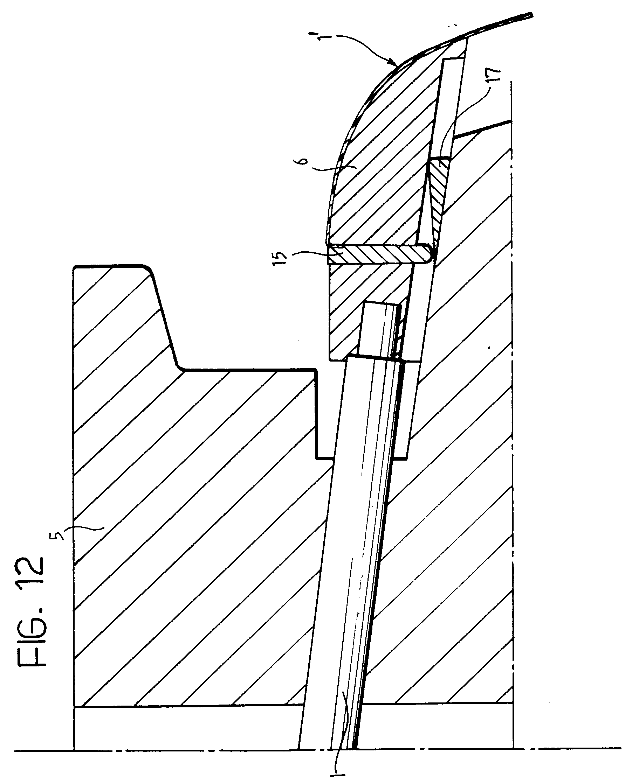

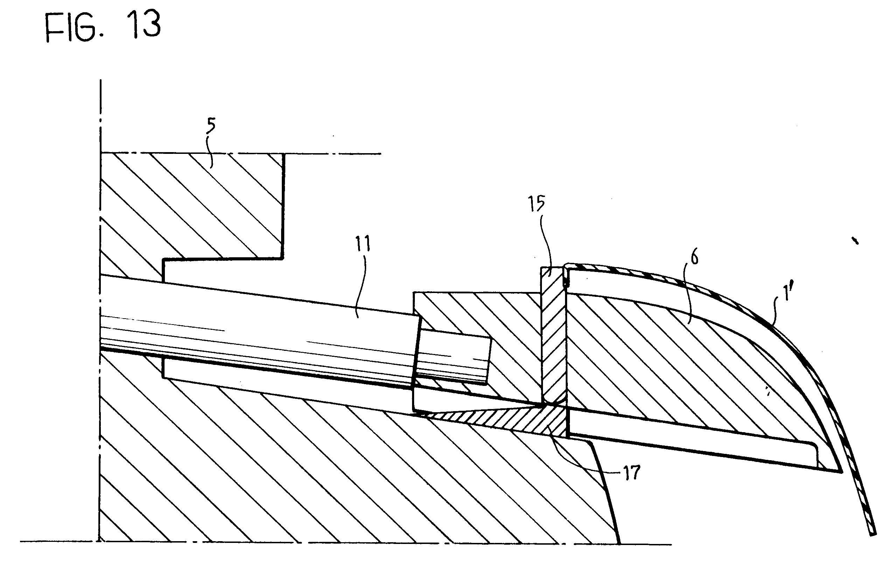

Figures 10 to 13 show the various stages of the removal, according to the invention, of the plastics bumper, after moulding, with reference to the portion indicated IX in Figure 8.

With reference to Figures 6 and 7, a plastics bumper, similar to that shown in Figures 1 and 2 but with the join line between the female matrix and the male die formed along a line B which is not visible once the bumper is mounted on the car for which it is intended, is indicated 1'.

Reference will now be made to Figures 8 to 13, in which parts the same as or corresponding to those already described with reference to Figures 3 to 7 are indicated by the same reference numerals. A die for plastics bumpers according to the invention is shown schematically in partial section in Figure 8, the join line between the female matrix 3 and the male die 4 being indicated B. The join line B, as can better be seen in Figure 9, which shows the part of the die indicated IX in Figure 8 more completely and on an enlarged scale, is in a position such as to prevent the female matrix 3 from being raised directly without damaging the bumper 1', because of the presence of the undercut 20 of the female matrix which would interfere with the undercut portion 14 of the bumper 1' if the female matrix 3 were raised vertically.

In order to open the die without damaging the bumper 1', it is necessary to proceed as shown in Figures 10 to 13 which show the portion of the die which is shown with the die in the closed condition in Figure 9, in the various configurations of the opening of the die.

Figures 9 to 13 show only the left-hand portion of the die of Figure 8 and, more precisely, as already stated, the portion indicated IX in that drawing, the following applying in exactly the same way to the right-hand portion.

It is assumed that the bumper 1' has been moulded and the die is closed as shown in Figure 9 and the bumper is to be removed from the die. With reference to Figures 10 to 13, the female matrix 3 and the block 6 are moved away from the male matrix 5 along respective translation axes, the matrix 3 being moved by known means, not shown, and the block 6 being urged by the inclined pin 11 which is moved by the translation plates 9 of Figure 8 which are not shown in Figures 9 to 13, for simplicity.

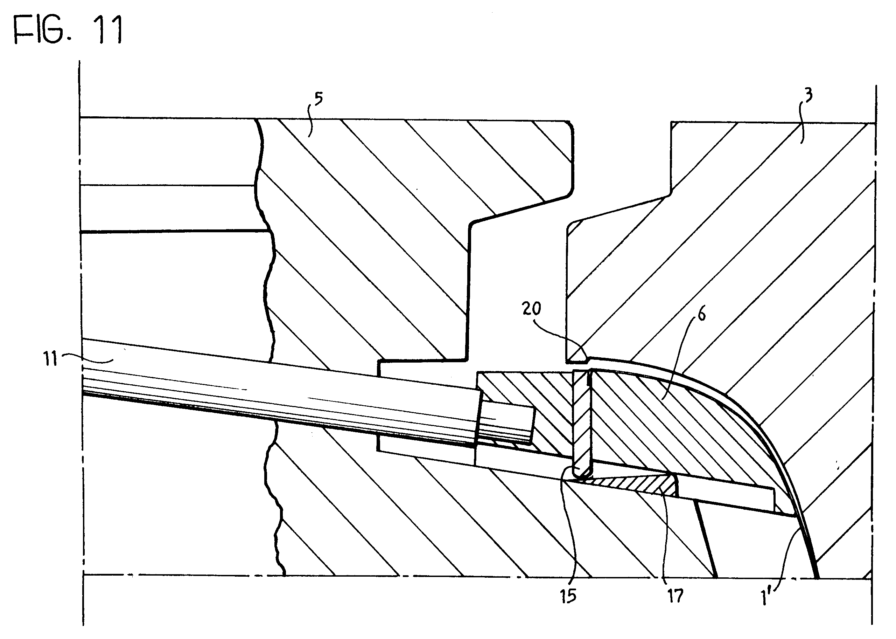

The female matrix 3 and the block 6 are moved away from the male matrix 5 substantially at the same speed so that the block 6 moves the bumper 1' away from the female matrix 3 and is spaced from the surface of the female matrix 3 in a transverse direction relative to the direction of movement of the matrix, thus enabling the undercut portion 20 of the female matrix 3 to be disengaged from the bumper 1' (Figure 10). At this point, the removal continues as already explained above, the female die 3 being moved away and the block 6 sliding upwards, bringing the stripping member 15 into contact with the inclined plane 17 until the bumper is detached from the male matrix 5 (Figures 11, 12, 13).

Naturally, the principle of the invention remaining the same, wide variations may be applied to the embodiment described and illustrated without, however, departing from the scope of the invention as defined in claims 1 and 2.

## Claims

1. A method of producing a bumper (1') for motor vehicles by injection moulding, by means of a die including a male die (4) and a female die (3) which is mounted for translation relative to the male die (4) in a first predetermined direction, a cavity (7) with a shape corresponding to that of the bumper (1') to be moulded being defined between the male die (4) and the female die (3), the male die (4) comprising a stationary matrix (5) and a pair of curved side blocks (6, 6') each of which has a convex surface which corresponds to an end portion of the internal surface of the bumper (1') and which is connected to the recessed seat of the male die (4) to form a corresponding re-entrant edge of the bumper (1'), the blocks (6,6') being translatable relative to the matrix (5) along respective axes inclined at an angle to the first direction and converging towards the female die (3), characterized in that the surface of the cavity of the female die (3) having, at each end, an undercut portion (20, 20') which is connected to the corresponding recessed seat of the male die (4) to form one of the edges of the bumper and a portion of the re-entrant rim adjacent the edge, each end of the female die (3) being connected to the male die (4) along join lines which extend between the edge and the end of the corresponding re-entrant rim, wherein, after the injection-moulding of a bumper (1'), the female die (3) and the blocks (6, 6') are moved away from the matrix (5) of the male die (4) along the respective translation axes, at substantially the same speed, in the said first direction, in a banner such that the blocks (6, 6') move the bumper away from the matrix (5) and are spaced from the surface of the female die (3) in a direction transverse the first direction, enabling the undercut portions (20, 20') of the female die (3) to be disengaged from the bumper (1').

2. A die for motor-vehicle bumpers for implementing the method according to Claim 1, including a male die (4) and a female die (3) which is mounted for translation relative to the male die (4) in a first predetermined direction, a cavity (7) with a shape corresponding to that of the bumper (1') to be moulded being defined between the male die (4) and the female die (3), the male die (4) comprising a stationary matrix (5) and a pair of curved side blocks (6, 6'), each of which has a convex surface which corresponds to an end portion of the internal surface of the bumper (1') and which is connected to a recessed seat of the male die (4) to form a corresponding re-entrant edge of the bumper, the blocks (6, 6') being translatable relative to the matrix (5) along respective axes inclined at an angle to the first direction and converging towards the female die (3), characterized in that the surface of the cavity of the female die (3) has, at each end, an undercut portion (20, 20') which is connected to the corresponding recessed seat of the male die (4) to form one of the edges of the bumper and a portion of the re-entrant rim adjacent the edge, each end of the female die (3) being connected to the male die (4) along join lines which extend between the edge and the ends of the corresponding re-entrant rim, the arrangement being such that, after the injection-moulding of the bumper (1'), the female die (3) and the blocks (6, 6') are moved away from the matrix (5) of the male die (4) along the respective translation axes at substantially the same speed, in the first direction, in a manner such that the blocks (6, 6') move the bumper away from the matrix (5) and are spaced from the surface of the female die (3) in a direction transverse the first direction, enabling the undercut portions (20, 20') of the female die (3) to be disengaged from the bumper (1').

## Patentansprüche

1. Verfahren, um eine Stoßstange (1') für Kraftfahrzeuge in einem Spritzgussverfahren mit Hilfe einer Form herzustellen, die ein Unterwerkzeug (4) und ein Oberwerkzeug (3), das für eine Verschiebung relativ zum Unterwerkzeug (4) in eine erste vorgegebene Richtung angebracht ist, sowie einen Hohlraum (7) mit einer Form aufweist, die der Form der Stoßstange (1') entspricht, die gepresst werden soll, wobei der Hohlraum zwischen dem Unterwerkzeug (4) und dem Oberwerkzeug (3) gebildet wird, wobei das Unterwerkzeug (4) eine ortsfeste Matrize (5) sowie ein Paar von gebogenen Seitenblöcken (6, 6') enthält, von denen jeder eine konvexe Fläche besitzt, die einem Endteil der Innenfläche der Stoßstange (1') entspricht und mit dem eingeschnittenen Sitz des Unterwerkzeugs (4) verbunden ist, um eine entsprechende Wiedereintrittskante der Stoßstange (1') zu bilden, wobei die Blöcke (6, 6') relativ zur Matrize (5) längs entsprechender Achsen verschiebbar sind, die zur ersten Richtung unter einem Winkel geneigt sind und zum Oberwerkzeug (3) zusammenlaufen, dadurch gekennzeichnet, dass die Fläche des Hohlraums des Oberwerkzeugs (3) an jedem Ende einen hinterstochenen Teil (20, 20') besitzt, der mit dem entsprechenden eingeschnittenen Sitz des Unterwerkzeugs (4) verbunden ist, um eine der Kanten der Stoßstange sowie einen Teil der Wiedereintrittskante neben der Kante zu bilden, wobei jedes Ende des Oberwerkzeugs (3) mit dem Unterwerkzeug (4) entlang von Verbindungslinien verbunden ist, die zwischen der Kante und dem Ende der entsprechenden Wiedereintrittskante verlaufen, wobei nach dem Pressen einer Stoßstange (1') das Oberwerkzeug (3) und die Blöcke (6, 6') von der Matrize (5) des Unterwerkzeugs (4) längs der entsprechenden Verschiebungsachsen mit im wesentlichen gleicher Geschwindigkeit in die erste Richtung so wegbewegt werden, dass die Blöcke (6, 6') die Stoßstange von der Matrize (5) wegbewegen und von der Fläche des Oberwerkzeugs (3) quer zur ersten Richtung beabstandet werden, wodurch die hinterstochenen Teile (20, 20') des Oberwerkzeugs (3) aus der Stoßstange (1') ausgerastet werden.

2. Form für die Stoßstange für Kraftfahrzeuge, um das Verfahren gemäß Anspruch 1 auszuführen, wobei die Form ein Unterwerkzeug (4) und ein Oberwerkzeug (3), das für eine Verschiebung relativ zum Unterwerkzeug (4) in eine erste vorgegebene Richtung angebracht ist, sowie einen Hohlraum (7) mit einer Form aufweist, die der Form der Stoßstange (1') entspricht, die gepresst werden soll, wobei der Hohlraum zwischen dem Unterwerkzeug (4) und dem Oberwerkzeug (3) gebildet wird, wobei das Unterwerkzeug (4) eine ortsfeste Matrize (5) sowie ein Paar von gebogenen Seitenblöcken (6, 6') enthält, von denen jeder eine konvexe Fläche besitzt, die einem Endteil der Innenfläche der Stoßstange (1') entspricht und mit dem eingeschnittenen Sitz des Unterwerkzeugs (4) verbunden ist, um eine entsprechende Wiedereintrittskante der Stoßstange zu bilden, wobei die Blöcke (6, 6') relativ zur Matrize (5) längs entsprechender Achsen verschiebbar sind, die zur ersten Richtung unter einem Winkel geneigt sind und zum Oberwerkzeug (3) zusammenlaufen, dadurch gekennzeichnet, dass die Fläche des Hohlraums des Oberwerkzeugs (3) an jedem Ende einen hinterstochenen Teil (20, 20') besitzt, der mit dem entsprechenden eingeschnittenen Sitz des Unterwerkzeugs (4) verbunden ist, um eine der Kanten der Stoßstange sowie einen Teil der Wiedereintrittskante neben der Kante zu bilden, wobei jedes Ende des Oberwerkzeugs (3) mit dem Unterwerkzeug (4) entlang von Verbindungslinien verbunden ist, die zwischen der Kante und den Enden der entsprechenden Wiedereintrittskante verlaufen, wobei der Aufbau so erfolgt, dass nach dem Pressen der Stoßstange (1') das Oberwerkzeug (3) und die Blöcke (6, 6') von der Matrize (5) des Unterwerkzeugs (4) längs der entsprechenden Verschiebungsachsen mit im wesentlichen gleicher Geschwindigkeit in die erste Richtung so wegbewegt werden, dass die Blöcke (6, 6') die Stoßstange von der Matrize (5) wegbewegen und von der Fläche des Oberwerkzeugs (3) quer zur ersten Richtung beabstandet werden, wodurch die hinterstochenen Teile (20, 20') des Oberwerkzeugs (3) aus der Stoßstange (1') ausgerastet werden.

## Revendications

1. Procédé pour produire un pare-chocs (1') pour des véhicules automobiles par moulage par injection, au moyen d'un moule qui inclut un moule mâle (4) et un moule femelle (3) qui est monté en translation par rapport au moule mâle (4) dans une première direction prédéterminée, une cavité (7) avec une forme correspondant à celle du pare-chocs (1') à mouler étant définie entre le moule mâle (4) et le moule femelle (3), le moule mâle (4) comprenant une matrice stationnaire (5) et une paire de blocs latéraux incurvés (6, 6') ayant chacun une surface convexe qui correspond à une partie terminale de la surface intérieure du pare-chocs (1') et qui est connecté au siège en creux du moule mâle (4) pour former un bord rentrant correspondant du pare-chocs (1'), les blocs (6, 6') étant susceptibles d'être déplacés en translation par rapport à la matrice (5) le long d'axes respectifs inclinés sous un angle par rapport à la première direction et convergeant vers le moule femelle (3), caractérisé en ce que la surface de la cavité du moule femelle (3) possède à chaque extrémité une partie en contre-dépouille (20, 20') qui est connectée au siège en creux correspondant du moule mâle (4) pour former l'un des bords du pare-chocs et une partie de la bordure rentrante adjacente au bord, chaque extrémité du moule femelle (3) étant connectée au moule mâle (4) le long de lignes de jointure qui s'étendent entre le bord et l'extrémité de la bordure rentrante correspondante, et dans lequel, après moulage par injection d'un pare-chocs (1'), le moule femelle (3) et les blocs (6, 6') sont déplacés en éloignement de la matrice (5) du moule mâle (4) le long d'axes de translation respectifs, sensiblement à la même vitesse, dans ladite première direction, d'une manière telle que les blocs (6, 6') déplacent le pare-chocs en éloignement de la matrice (5), et sont espacés de la surface du moule femelle (3) dans une direction transversale à la première direction, permettant aux parties en contre-dépouille (20, 20') du moule femelle (3) d'être dégagées depuis le pare-chocs (1').

2. Moule pour pare-chocs de véhicules automobiles, destiné à mettre en oeuvre le procédé selon la revendication 1, comprenant un moule mâle (4) et un moule femelle (3) qui est monté pour se déplacer en translation par rapport au moule mâle (4) dans une première direction prédéterminée, une cavité (7) avec une forme correspondant à celle du pare-chocs (1') à mouler étant définie entre le moule mâle (4) et le moule femelle (3), le moule mâle (4) comprenant une matrice stationnaire (5) et une paire de blocs latéraux incurvés (6, 6'), qui ont chacun une surface convexe correspondant à une partie terminale de la surface intérieure du pare-chocs (1') et qui est connectée à un siège en creux du moule mâle (4) pour former un bord rentrant correspondant du pare-chocs, les blocs (6, 6') étant susceptibles d'être déplacés en translation par rapport à la matrice (5) le long d'axes respectifs inclinés sous un angle par rapport à la première direction et convergeant vers le moule femelle (3), caractérisé en ce que la surface de la cavité du moule femelle (3) possède à chaque extrémité une partie en contre-dépouille (20, 20') qui est connectée au siège en creux correspondant du moule mâle (4) pour former l'un des bords du pare-chocs et une partie de la bordure rentrante adjacente au bord, chaque extrémité du moule femelle (3) étant connectée au moule mâle (4) le long de lignes de jointure qui s'étendent entre le bord et l'extrémité de la bordure rentrante correspondante, l'agencement étant tel que, après moulage par injection d'un pare-chocs (1'), le moule femelle (3) et les blocs (6, 6') sont déplacés en éloignement de la matrice (5) du moule mâle (4) le long d'axes de translation respectifs, sensiblement à la même vitesse, dans ladite première direction, d'une manière telle que les blocs (6, 6') déplacent le pare-chocs en éloignement de la matrice (5), et sont espacés de la surface du moule femelle (3) dans une direction transversale à la première direction, permettant aux parties en contre-dépouille (20, 20') du moule femelle (3) d'être dégagées depuis le pare-chocs (1').
